# EUROPÄISCHE PATENTSCHRIFT

(11) **EP 0 610 566 B1**
(45) Veröffentlichungstag und Bekanntmachung des Hinweises auf die Patenterteilung: **05.03.1997**
(21) Anmeldenummer: 93119331.2
(22) Anmeldetag: 01.12.1993
(51) Int. Cl.: B60T 15/04

(54) **Einrichtung zum Erzeugen einer Reaktionskraft**
Device for creation of a reaction force
Disposif pour générer une force de réaction

(30) Priorität: 12.02.1993 DE 4304243
(43) Veröffentlichungstag der Anmeldung: 17.08.1994
(73) Patentinhaber: WABCO GmbH, D-30453 Hannover (DE)
(72) Erfinder: Bartscher, Peter, D-30457 Hannover (DE); Gieseke, Bernd, D-30982 Pattensen (DE); Herzog, Stefan, D-30449 Hannover (DE); Martini, Gerhard, D-30989 Gehrden (DE); Ulrich, Helmut, D-31832 Springe (DE)
(74) Vertreter: Schrödter, Manfred, Dipl.-Ing.

(56) Entgegenhaltungen:
- EP-A- 0 049 774
- DE-A- 2 834 021
- DE-A- 3 225 244
- DE-A- 3 513 292

## Beschreibung

Die Erfindung betrifft eine Einrichtung zum Erzeugen einer Reaktionskraft für das Betätigungsglied einer zu betätigenden Einrichtung gemäß dem Oberbegriff des Patentanspruchs 1.

Aus der Veröffentlichung "Beschreibung der Druckluftgeräte in Fahrzeugen", der Firma WABCO Westinghouse Fahrzeugbremsen GmbH, Ausgabe März 1989, ist ein Motorwagen-Bremsventil bekannt, dessen Ventilschließglied mittels eines zwischen einer Trittplatte und dem Ventilschließglied angeordneten Stößels in Öffnungsrichtung des Ventils bewegbar ist. Mittels einer den Stößel entgegen der Öffnungsrichtung des Ventils belastenden, als Spiralfeder ausgebildeten Druckfeder wird der Stößel beim Entlasten der Trittplatte in Richtung auf seine Ausgangsstellung zu zurückbewegt. Die beim Betätigen der Trittplatte auf den Stößel einwirkende Reaktionskraft der Druckfeder vermittelt der das Motorwagen-Bremsventil betätigenden Person, das für eine feinfühlige Bremsung erforderliche Gefühl für einen schnellen oder langsamen Druckaufbau in den Bremszylindern eines Fahrzeugs und somit für eine gewünschte mehr oder weniger starke Verzögerung des Fahrzeugs.

Bei einem mit einem Retarder ausgerüsteten Fahrzeug wird über das Motorwagen-Bremsventil zusätzlich der Retarder ein- und ausgeschaltet, wobei bei Betätigung des Motorwagen-Bremsventils zuerst der Retarder eingeschaltet und dann das Ventil zur Verbindung der Bremszylinder mit der Druckmittelquelle in die Offenstellung gebracht wird.

Um der das Motorwagen-Bremsventil betätigenden Person den Beginn des Öffnungsvorganges des Ventils zu signalisieren, sind der Stößel und die Trittplatte so zueinander angeordnet, daß die Trittplatte erst nach dem Durchfahren eines vorbestimmten Leerweges am Stößel zur Anlage kommt.

Der Einschaltpunkt für den Retarder liegt innerhalb dieses Leerweges. Der Einschaltpunkt oder auch Druckpunkt für das Ventil liegt in etwa am Ende des Leerweges.

Um auch für den Bereich des Leerweges eine auf die Trittplatte einwirkende als Rückstellkraft dienende Reaktionskraft zu haben, ist an der das Gehäuse des Motorwagen-Bremsventils mit der Trittplatte verbindenden Gelenkstelle eine Drehfeder angeordnet, die entgegen der Betätigungsrichtung auf die Trittplatte einwirkt.

Da der Stößel bei einer Betätigung des Motorwagen-Bremsventils einen relativ großen Hub macht, ist es erforderlich, zum Erzeugen einer Reaktionskraft und zum Teil auch Rückstellkraft für den Stößel eine Druckfeder mit großem Windungsabstand zu verwenden.

Es ist von Vorteil, zur Erzeugung einer großen Reaktionskraft für den Stößel und somit zur Erzeugung eines für den Fahrer des Fahrzeugs deutlich spürbaren Druckpunktes, eine starke Feder zu wählen.

Die Möglichkeit, die als Rückstellkraft dienende Reaktionskraft zu erhöhen, ist jedoch aufgrund der baulichen Gegebenheiten, insbesondere bei einem Motorwagen-Bremsventil, stark eingeschränkt, da eine höhere Rückstellkraft eine stärkere und somit auch größere Feder erfordert. Zudem nimmt die auf den Stößel und somit auch auf die Trittplatte einwirkende Kraft der Feder mit zunehmendem Hub des Stößels ebenfalls zu, was nicht immer wünschenswert ist.

Der Erfindung liegt deshalb die Aufgabe zugrunde, eine Einrichtung zum Erzeugen einer Reaktionskraft zu schaffen, die unabhängig von der zu erzeugenden Kraft nur einen relativ kleinen Einbauraum benötigt.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Reaktionskraft erzeugen zu können, deren Größe in Abhängigkeit von der gewählten Druckmittelquelle über den gesamten Hub des Betätigungsgliedes gleich bleibt oder sich ändert.

Die Erfindung ist nicht auf den Einsatz bei Motorwagen-Bremsventilen beschränkt, obwohl ihre Anwendung dort besonders vorteilhaft ist.

Aus der DE-A-28 34 021 ist ein Motorwagen-Bremsventil bekannt, welches einen Ventilschieber besitzt, der mit seinem einen Ende formschlüssig mit einem als Trittplatte ausgebildeten Betätigungshebel verbunden ist. Der Ventilschieber ist derart im Durchmesser abgesetzt, daß eine Wirkfläche gebildet wird, die vom Druckmittel in einer Druckmittelkammer beaufschlagt wird. Bei einem Betätigungshub des Betätigungshebels wird so die vom Druckmittel über diese Wirkfläche auf den Ventilschieber ausgeübte Kraft als Gegenkraft beim Betätigungshub und als Rückstellkraft für den Betätigungshebel genutzt.

Mit dieser Einrichtung ist es jedoch nicht möglich, einen für die das Motorwagen-Bremsventil betätigende Person spürbaren definierten Druckpunkt zu bilden, da die Gegenkraft bzw. die Rückstellkraft über den gesamten Betätigungshub des Betätigungshebels wirksam ist.

Anhand der Zeichnung werden nachfolgend zwei Ausführungsbeispiele der Erfindung näher erläutert.

Es zeigen:
- Figur 1: einen Auschnitt eines Motorwagen-Bremsventils mit einer in das Motorwagen-Bremsventil integrierten Zylinder-Kolben-Einrichtung zum Erzeugen einer Reaktionskraft für den Stößel und
- Figur 2: einen Ausschnitt eines Motorwagen-Bremsventils mit einer in das Motorwagen-Bremsventil teilintegrierten Einrichtung zum Erzeugen einer Reaktionskraft für den Stößel, wobei der Kolben einer Zylinder-Kolben-Einrichtung über einen Kipphebel auf den Stößel des Motorwagen-Bremsventils einwirkt.

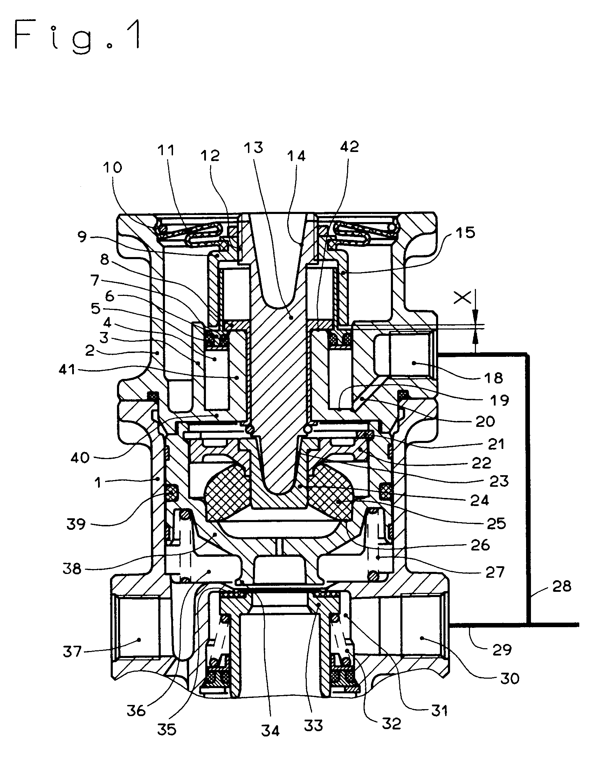

Gemäß Figur 1 sind in einem aus einem unteren Gehäuseteil (1) und einem oberen Gehäuseteil (2) bestehenden Gehäuse (1, 2) einer als Motorwagen-Bremsventil ausgebildeten zu betätigenden Einrichtung eine Druckmitteleingangskammer (31) und eine Druckmittelausgangskammer (36) angeordnet. Die Druckmitteleingangskammer (31) ist über einen Druckmittelanschluß (30) und eine Druckmittelleitung (29) mit einem nicht dargestellten, als Druckmittelquelle dienenden Druckmittel-Vorratsbehälter verbunden. Über einen Druckmittelanschluß (37) steht die Druckmittelausgangskammer (36) mit als Verbraucher dienenden Bremszylindern in Verbindung.

Die Druckmittelausgangskammer (36) ist über ein kombiniertes Einlaß- und Auslaßventil (34, 33, 35) wahlweise mit der Druckmittelquelle oder mit einer Druckmittelsenke, gemäß diesem Ausführungsbeispiel mit der Atmosphäre, verbindbar. Das Einlaßventil (35, 33) des kombinierten Einlaß- und Auslaßventils (35, 33, 34) setzt sich aus einem gehäusefesten Ventilsitz (35) und einem relativ zum Ventilsitz (35) bewegbaren Ventilglied (33) zusammen, wobei das Ventilglied (33) von einer sich an einem Gehäusevorsprung abstützenden Druckfeder (32) in Richtung auf den Einlaßventilsitz (35) zu belastet und unter Vorspannung an diesem gehalten wird. Das Auslaßventil (34, 33) des kombinierten Einlaß- und Auslaßventils (35, 33, 34) setzt sich aus einem sich auf das Ventilglied (33) zu erstreckenden Fortsatz (34) eines Steuerkolbens (38) und dem Ventilglied (33) zusammen.

Der Steuerkolben (38) ist mittels eines Dichtringes (39) abgedichtet, in Richtung der Längsachse des kombinierten Einlaß- und Auslaßventils (35, 33, 34) bewegbar, im unteren Gehäuseteil (1) angeordnet.

Der Steuelkolben (38) weist auf seiner dem kombinierten Einlaß- und Auslaßventil (35, 33, 34) abgewandten Seite eine abgestufte Ausnehmung auf. Auf einer Stufe (26) der diese Ausnehmung begrenzenden Wand des Steuerkolbens (38) sitzt ein als Gummifeder ausgebildetes Federelement (25) auf.

Eine Druckfeder (27), die sich an der den gehäusefesten Ventilsitz (35) aufweisenden Wand des unteren Gehäuseteiles (1) abstützt, belastet den Steuerkolben (38) in Richtung vom kombinierten Einlaß- und Auslaßventil (35, 33, 34) weg und hält so den Steuerkolben (38) unter Vorspannung an einer Wand (40) des oberen Gehäuseteiles (2). Die Wand (40) ist Teil des oberen Gehäuseteiles (2) und verläuft quer zur Längsachse des Gehäuses (1, 2), wobei sie im wesentlichen den Innenraum des oberen Gehäuseteiles (2) vom Innenraum des unteren Gehäuseteiles (1) trennt.

Die Gummifeder (25) weist eine zentrisch angeordnete Ausnehmung auf, in der eine mit einer kegelförmigen Ausnehmung (23) versehene Kalotte (24) angeordnet ist. Die Kalotte (24) wird von einem ringförmigen Teil (22) gehalten, welches in der abgestuften Ausnehmung des Steuerkolbens (38) in Richtung der Längsachse des Steuerkolbens (38) bewegbar angeordnet ist. Auf der der Gummifeder (25) abgewandten Seite des ringförmigen Teiles (22) ist im Steuerkolben (38) ein Sicherungsring (21) vorgesehen, an welchem das ringförmige Teil (22) anliegt.

Die im zweiten Gehäuseteil (2) angeordnete Wand (40) weist zwei koaxial zueinander angeordnete, im wesentlichen parallel zur Längsachse des Gehäuses (1, 2) verlaufende, sich in den Innenraum des zweiten Gehäuseteiles (2) hineinerstreckende ringförmige Schenkel (41) und (3) auf.

Von den einander zugewandten Seiten der beiden Schenkel (41, 3) wird eine Druckmittelkammer (4) begrenzt, deren Bodenteil (19) von der Wand (40) gebildet wird. Die Druckmittelkammer (4) ist über einen Gehäusekanal (20) mit einem Druckmittelanschluß (18) verbunden, welcher über eine Druckmittelleitung (28) an die Druckmittelleitung (29) angeschlossen ist, die zur Verbindung der Druckmitteleingangskammer (31) mit der Druckmittelquelle dient. Die Druckmittelkammer (4) ist somit mit einer Druckmittelquelle konstanten Druckes verbunden.

Das Volumen der Druckmittelkammer (4) ist mittels einer als Kolben (5, 6, 7) ausgebildeten bewegbar angeordneten Wand veränderbar, welche die Seite der Druckmittelkammer (4) bildet, die dem Bodenteil (19) gegenüberliegt.

Die beiden Schenkel (41, 3) mit dem Bodenteil (19), dem Kolben (5, 6, 7) und der Druckmittelkammer (4) bilden so eine Zylinder-Kolben-Einrichtung (41, 3, 19, 5, 6, 7, 4).

Von der der Druckmittelkammer (4) abgewandten Seite des inneren ringförmigen Schenkels (41) wird eine Durchgangsöffnung für einen als Betätigungsglied für das kombinierte Einlaß- und Auslaßventil (35, 34) dienenden Stößel (13) gebildet. In der Durchgangsöffnung ist eine Führungshülse (8) angeordnet, in welcher der Stößel (13) gleitend geführt wird. Der Stößel (13) weist an seiner der Gummifeder (25) zugewandten Seite einen kegelförmigen Endbereich auf, der sich in die kegelförmige Ausnehmung (23) der Kalotte (24) hineinerstreckt und sich in Anlage mit der die Ausnehmung (23) der Kalotte (24) begrenzenden Wand befindet.

Auf den dem kegelförmigen Endbereich abgewandten Endbereich des Stößels (13) ist eine Innengewinde (12) tragende Ringscheibe (9) aufgeschraubt. An der Ringscheibe (9) ist ein parallel zur Längsachse des Stößels (13) verlaufender, sich auf den Kolben (5, 6, 7) der Zylinder-Kolben-Einrichtung (41, 3, 19, 5, 6, 7, 4) zu erstreckender ringförmiger Vorsprung (15) angeformt, der so bemessen ist, daß er bei einer Bewegung des Stößels (13) in Öffnungsrichtung des kombinierten Einlaß- und Auslaßventils (35, 33, 34) am Kolben (5, 6, 7) zur Anlage kommt und den Kolben (5, 6, 7) in Richtung auf den Boden (19) der Druckmittelkammer (4) zu verschieben kann. Der Stößel (13) und die Ringscheibe (9) mit dem Vorsprung (15) bilden eine Baueinheit (13, 9, 15). Die Ringscheibe (9) bildet zusammen mit dem Vorsprung (15) ein Kraftübertragungsglied (9, 15) zum Übertragen der auf den Stößel (13) ausgeübten Kraft auf den Kolben (5) bzw. zum Übertragen der vom Druckmittel in der Druckmittelkammer (4) auf den Kolben (5) ausgeübten Kraft auf den Stößel (13).

Ein Faltenbalg (11) ist mit seinem inneren Randbereich an der Ringscheibe (9) und mit seinem äußeren Randbereich in eine Nute (10) des zweiten Gehäuseteiles (2) befestigt. Der Faltenbalg (11) verhindert das Eindringen von Schmutz und Feuchtigkeit in den Innenraum des Gehäuses (1, 2) über das Gehäuseteil (2).

Von der der Gummifeder (25) abgewandten Stirnseite des Stößels (13) ausgehend erstreckt sich eine kegelförmige Ausnehmung (14) in den Stößel (13) hinein. Die Ausnehmung (14) dient zur Aufnahme eines nicht dargestellten Druckstückes, über welches der Stößel (13) z. B. mit der nicht gezeigten Trittplatte des Motorwagen-Bremsventils in Wirkverbindung steht.

Das erwähnte ringförmige Teil (22) bildet mit der Kalotte (24), der Gummifeder (25) und dem Steuerkolben (38) ein Zwischenglied (22, 24, 25, 38), über welches der Stößel (13) mit dem kombinierten Einlaß- und Auslaßventil (35, 34, 33) in Wirkverbindung steht.

Die Funktion der im vorstehenden beschriebenen Einrichtung wird nachfolgend näher erläutert.

Gemäß Figur 1 befindet sich das Motorwagen-Bremsventil in seiner unbetätigten Stellung. Das Einlaßventil (35, 33) befindet sich in der Schließstellung und das Auslaßventil (34, 33) ist geöffnet. Die Druckmittelausgangskammer (36) ist mit der Atmosphäre verbunden. In der Druckmitteleingangskammer (31) steht Vorratsdruck aus der Druckmittelquelle an. Desgleichen steht über die Druckmittelleitungen (28, 29) und den Druckmittelanschluß (18) sowie den Gehäusekanal (20) Vorratsdruck aus der Druckmittelquelle in der Druckmittelkammer (4) an.

Der Kolben (5, 6, 7) der Einrichtung zum Erzeugen einer Reaktionskraft bzw. einer Rückstellkraft für das als Stößel (13) ausgebildete Betätigungsglied wird vom Druckmittel in der Druckmittelkammer (4) entgegen der Betätigungsrichtung für den Stößel (13) und somit auch entgegen der Öffnungsrichtung des Einlaßventils (35, 33) des kombinierten Einlaß- und Auslaßventils (35, 33, 34) an einem an der Buchse (8) angeordneten Anschlag (42) gehalten.

Durch die Kraft der auf den Steuerkolben (38) einwirkenden Feder (27) wird der Stößel (13) in einer Position gehalten, in welcher die freie Stirnseite des umlaufenden Vorsprungs (15) der mit dem Stößel (13) verbundenen Ringscheibe (9) einen Abstand (x) zu der ihm zugewandten Seite des Kolbens (5, 6, 7) hat. Der Abstand (x) entspricht in etwa dem Abstand zwischen Auslaßventilsitz (34) und Ventilglied (33) bei geöffnetem Auslaßventil (34, 33). Somit entspricht der Abstand (x) auch dem Leerweg der Trittplatte beim Einleiten eines Bremsvorganges. Innerhalb dieses Leerweges (x) liegt beispielsweise der Schaltpunkt für den Retarder.

Wird vom Fahrer des Fahrzeugs die Trittplatte zum Durchführen einer Bremsung betätigt, so wird der Stößel (13) abwärts, in Schließrichtung des Auslaßventils (34, 33) bewegt. Über die Kalotte (24) und die Gummifeder (25) wirkt die vom Stößel (13) auf die Gummifeder (25) ausgeübte Kraft auf den Steuerkolben (38) ein, wodurch dieser entgegen der Kraft der Feder (27) in Richtung auf das kombinierte Einlaß- und Auslaßventil (35, 33, 34) zu bewegt wird. Das Auslaßventil (34, 33) gelangt in die Schließstellung.

Der über die Ringscheibe (9) mit dem Stößel (13) verbundene umlaufende Vorsprung (15) durchfährt dabei den Weg (x) und kommt am Kolben (5, 6, 7) zur Anlage. Wird die Trittplatte des Motorwagen-Bremsventils vom Fahrer des Fahrzeugs weiter abwärts bewegt, so werden auch der Stößel (13), die mit dem Stößel (13) verbundene, den umlaufenden Vorsprung (15) aufweisende Ringscheibe (9) und über die Gummifeder (25) der Steuerkolben (38) weiter abwärtsbewegt.

Der Kolben (5, 6, 7) der Einrichtung zum Erzeugen einer Reaktionskraft wird von dem umlaufenden Vorsprung (15) der mit dem Stößel (13) verbundenen Ringscheibe (9) in Richtung auf den die Druckmittelkammer (4) begrenzenden Boden (19) zubewegt.

Die der über die Trittplatte auf den Stößel (13) ausgeübten Betätigungskraft entgegengerichtete Kraft der Feder (27) nimmt jetzt um die vom Druckmittel in der Druckmittelkammer (4) erzeugte, über den Kolben (5, 6, 7), den umlaufenden Vorsprung (15) und die Ringscheibe (9) auf den Stößel (13) ausgeübte Kraft zu. Bei der weiteren Abwärtsbewegung des Stößels (13) gelangt das Einlaßventil (35, 33) in die Offenstellung. Von der Druckmitteleingangskammer (31) strömt Druckmittel über das jetzt geöffnete Einlaßventil (35, 33) in die Druckmitteleingangskammer (36) und von dieser weiter über den Druckmittelausgang (37) zu den als Bremszylinder ausgebildeten Verbrauchern.

Die vom Druckmittel in der Druckmittelkammer (4) erzeugte und über den Kolben (5, 6, 7) sowie das mit dem Stößel (13) verbundene Bauteil (Ringscheibe 9, umlaufender Vorsprung 15) auf den Stößel (13) einwirkende als Rückstellkraft dienende Reaktionskraft nimmt bei der weiteren Bewegung des Kolbens (5, 6, 7) im Sinne einer Volumenverringerung in der Druckmittelkammer (4) nicht weiter zu, da der Druck in der Druckmittelkammer (4) gleich dem Druck in der Druckmittelquelle ist und die Höhe dieses Druckes sich nicht ändert.

Die nach dem Durchfahren des Leerweges (x) auf den Stößel (13) und somit auf die Trittplatte einwirkende Rückstellkraft wird vom Fahrer des Fahrzeugs als Druckpunkt empfunden, welcher dem Fahrer signalisiert, daß das Auslaßventil (34, 33) geschlossen ist und der Öffnungsvorgang für das Einlaßventil (35, 33) beginnt.

Wünscht der Fahrer des Fahrzeugs lediglich eine Verzögerung des Fahrzeugs mittels des Retarders, z. B. auf einer Gefällestrecke, so hält er die Trittplatte in der Position, in welcher die vom Druckmittel in der Druckmittelkammer (4) erzeugte Reaktionskraft (Druckpunkt) spürbar ist. Einlaßventil (35, 33) und Auslaßventil (34, 33) sind bei dieser Stellung der Trittplatte geschlossen.

Zwecks Beendigung eines Bremsvorganges wird vom Fahrer des Fahrzeugs der Fuß von der Trittplatte des Motorwagen-Bremsventils genommen. Durch die über den Kolben (5, 6, 7) und die mit diesem zusammenwirkende Ringscheibe (9) mit Vorsprung (15) auf den Stößel (15) einwirkende Rückstellkraft des Druckes in der Druckmittelkammer (4) sowie durch die über den Steuerkolben (38) und die Gummifeder (25) auf den Stößel (13) in gleicher Richtung einwirkende Kraft der Feder (27) wird der Stößel (13) nach oben, in Richtung vom kombinierten Einlaß- und Auslaßventil (35, 33, 34) weg bewegt. Das Einlaßventil (35, 33) gelangt in die Schließstellung. Der Kolben (5, 6, 7) kommt unter der Einwirkung der Kraft des Druckmittels in der Druckmittelkammer (4) am Anschlag (42) zur Anlage und hat jetzt keinen Einfluß mehr auf den Stößel (13).

Die auf den Stößel (13) einwirkende Kraft reduziert sich jetzt bis auf die von der Feder (27) erzeugte Kraft. Mittels der Kraft der Feder (27) wird der Stößel (13) weiter nach oben bewegt, durchfährt dabei den Weg (x) und nimmt dann seine Ausgangsstellung ein. Da der Stößel (13) mit der Trittplatte in Verbindung steht, gelangt auch diese wieder in ihre Ausgangsstellung. Das Auslaßventil (34, 33) befindet sich jetzt wieder in der Offenstellung. Die Bremszylinder werden über die Druckmittelausgangskammer (36) und das Auslaßventil (34, 33) zur Atmosphäre hin entlüftet.

Zur Unterstützung der Rückstellbewegung der Trittplatte kann im Bereich der Drehgelenkstelle für die Trittplatte zusätzlich eine auf die Trittplatte einwirkende Drehfeder vorgesehen werden.

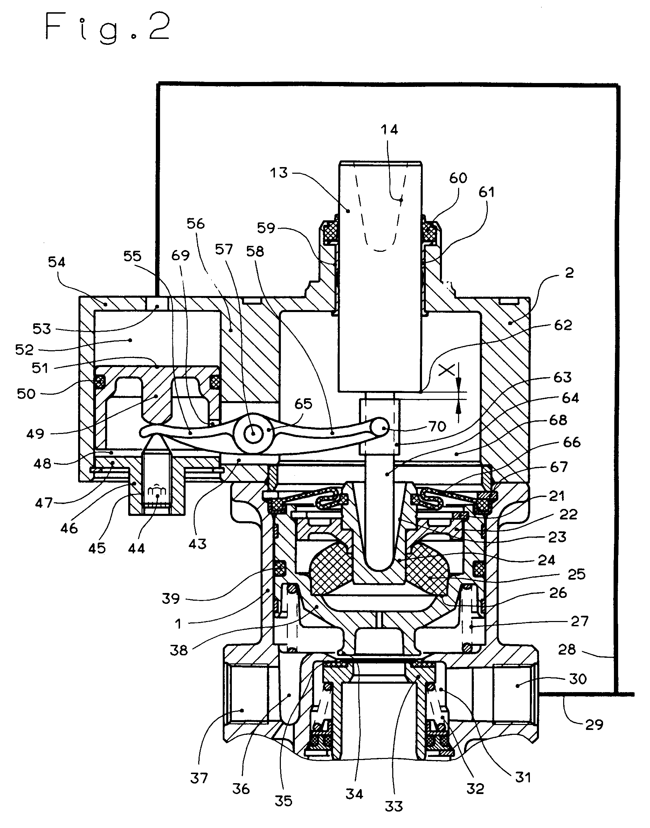

Die in Figur 2 gezeigte Einrichtung zum Erzeugen einer Reaktionskraft weist einen mit dem Stößel eines Motorwagen-Bremsventils verbundenen Kipphebel auf.

Der besseren Übersicht halber sind die den in Figur 1 gezeigten Bauteilen gleichen Bauteile mit gleichen Bezugsziffern versehen.

Gemäß Figur 2 sind in einem aus einem unteren Gehäuseteil (1) und einem oberen Gehäuseteil (2) bestehenden Gehäuse (1, 2) einer als Motorwagen-Bremsventil ausgebildeten zu betätigenden Einrichtung eine Druckmitteleingangskammer (31) und eine Druckmittelausgangskammer (36) angeordnet. Die Druckmitteleingangskammer (31) ist über einen Druckmittelanschluß (30) und eine Druckmittelleitung (29) mit einem nicht dargestellten, als Druckmittelquelle dienenden Druckmittel-Vorratsbehälter verbunden. Über einen Druckmittelanschluß (37) steht die Druckmittelausgangskammer (36) mit als Verbraucher dienenden Bremszylindern eines Fahrzeugs in Verbindung.

Die Druckmittelausgangskammer (36) ist über ein kombiniertes Einlaß- und Auslaßventil (34, 33, 35) wahlweise mit der Druckmittelquelle oder mit einer Druckmittelsenke, gemäß diesem Ausführungsbeispiel mit der Atmosphäre, verbindbar.

Das Einlaßventil (35, 33) des kombinierten Einlaß- und Auslaßventils (35, 33, 34) setzt sich aus einem gehäusefesten Ventilsitz (35) und einem relativ zum Ventilsitzt (35) bewegbaren Ventilglied (33) zusammen, wobei das Ventilglied (33) von einer sich von einem Gehäusevorsprung abstützenden Druckfeder (32) in Richtung auf den Einlaßventilsitz (35) zu belastet und unter Vorspannung an diesem gehalten wird. Das Auslaßventil (34, 33) des kombinierten Einlaß- und Auslaßventils (35, 33, 34) setzt sich aus einem sich auf das Ventilglied (33) zu erstreckenden Fortsatz (34) eines Steuerkolbens (38) und dem Ventilglied (33) zusammen.

Der Steuerkolben (38) ist mittels eines Dichtringes (39) abgedichtet, in Richtung der Längsachse des kombinierten Einlaß- und Auslaßventils (35, 33, 34) bewegbar im unteren Gehäuseteil (1) angeordnet.

Der Steuerkolben (38) weist auf seiner dem kombinierten Einlaß- und Auslaßventil (35, 33, 34) abgewandten Seite eine abgestufte Ausnehmung auf. Auf einer Stufe (26) der dieser Ausnehmung begrenzenden Wand des Steuerkolbens (38) sitzt ein als Gummifeder (25) ausgebildetes Federelement auf. Eine Druckfeder (27), die sich an der den gehäusefesten Ventilsitz (35) aufweisenden Wand des unteren Gehäuseteiles (1) abstützt, belastet den Steuerkolben (38) in Richtung vom kombinierten Einlaß- und Auslaßventil (35, 33, 34) weg und hält so den Steuerkolben (38) unter Vorspannung an einem Anschlag (67) des unteren Gehäuseteiles (1).

Die Gummifeder (25) weist eine zentrisch angeordnete Ausnehmung auf, in der eine mit einer kegelförmigen Ausnehmung (23) versehenen Kalotte (24) angeordnet ist. Die Kalotte (24) wird von einem ringförmigen Teil (22) gehalten, welches in der abgestuften Ausnehmung des Steuerkolbens (38) in Richtung der Längsachse des Steuerkolbens (38) bewegbar angeordnet ist. Auf der der Gummifeder (25) abgewandten Seite des ringförmigen Teiles (22) ist im Steuerkolben (38) ein Sicherungsring (21) vorgesehen, an welchem das ringförmige Teil (22) unter der Vorspannung der den Steuerkolben (38) beaufschlagenden Druckfeder (27) anliegt.

Ein als Betätigungsglied für das kombinierte Einlaß- und Auslaßventil (35, 33, 34) dienender, abgestuft ausgebildeter Stößel (13, 64) ist in einer Führungsbuchse (61), die eine abgestufte Durchgangsöffnung (59) in der Stirnwand des zweiten Gehäuseteiles (2) auskleidet, gleitend geführt und erstreckt sich mit seinem einen Ende in die kegelförmige Ausnehmung (23) der Kalotte (24) hinein. In der Abstufung der die Durchgangsöffnung (59) begrenzenden Wand ist ein Abstreifring (60) gelagert, der den Stößel (13, 64) umschließt.

Von der der Gummifeder (25) abgewandten Stirnseite des Stößels (13) ausgehend erstreckt sich eine kegelförmige Ausnehmung (14) in den Stößel (13) hinein. Die Ausnehmung (14) dient zur Aufnahme eines nicht dargestellten Druckstückes, über welches der Stößel (13, 64), mit der nicht gezeigten Trittplatte des Motorwagen-Bremsventils, in Wirkverbindung steht.

Ein Faltenbalg (66) ist mit seinem inneren Randbereich an der Kalotte (24) und mit seinem äußeren Randbereich in einer Nut des ersten Gehäuseteiles (1) befestigt. Der Faltenbalg (66) verhindert das Eindringen von Schmutz und Feuchtigkeit in den Innenraum des ersten Gehäuseteils (1) über das zweite Gehäuseteil (2).

Das obere Gehäuseteil (2) besitzt eine Druckmittelkammer (52), die von dem an den Faltenbalg (66) angrenzenden Raum (68) im oberen Gehäuseteil (2) durch eine Wand (56) getrennt ist. Die Druckmittelkammer (52) wird von einer als Kolben (51) ausgebildeten bewegbar angeordneten Wand begrenzt, die mittels eines Dichtringes (50) abgedichtet im oberen Gehäuseteil (2) geführt ist.

Über einen Druckmittelanschluß (53) und eine Druckmittelleitung (28) ist die Druckmittelkammer (52) mit der Druckmittelleitung (29) verbunden, welche die Druckmittelquelle mit dem Druckmittelanschluß (30) für die Druckmitteleingangskammer (31) verbindet.

Die Wand (56) weist in ihrem außerhalb des die Druckmittelkammer (52) begrenzenden Bereiches gelegenen Bereich eine Durchgangsöffnung (43) auf. In dem die Durchgangsöffnung (43) begrenzenden Teil der Wand (56) ist ein Lagerzapfen (57) angeordnet, auf dem ein Kipphebel (55, 65, 58) nach Art einer Wippe verschwenkbar gelagert ist. Der Kipphebel (55, 65, 58) dient als Kraftübertragungsglied zum Übertragen der auf den Stößel (13, 64) ausgeübten Kraft auf den Kolben (51) bzw. zum Übertragen der vom Druckmittel in der Druckmittelkammer (52) auf den Kolben (51) ausgeübten Kraft auf den Stößel (13, 64). Der Kipphebel (55, 65, 58) weist von seinem Lagerauge (65) ausgehend einen ersten Arm (55) und einen zweiten Arm (58) auf.

Der erste Arm (55) erstreckt sich quer zur Längsachse des zweiten Gehäuseteiles (2) verlaufend in einen durch den Kolben (51) von der Druckmittelkammer (52) getrennten Kolbenrückraum (48) hinein, wobei er durch eine Aussparung (69) im Kolbenmantel hindurchtritt. Die Länge des ersten Armes (55) ist so gemessen, daß er mit seinem freien Endbereich an einem zentrisch am Kolben (51) angeordneten, in Richtung der Längsachse des Kolbens (51) verlaufenden und sich in den Kolbenrückraum (48) hineinerstreckenden Vorsprung (49) anliegt. Der zweite Arm (58) erstreckt sich, quer zur Längsachse des Gehäuses (1, 2) verlaufend, in den Raum (68) des oberen Gehäuseteiles (2) hinein. Die Länge des zweiten Armes (58) ist so bemessen, daß sein freier Endbereich ein Stück über die Mittelachse des Stößels (13) hinausragt. Mittels eines Lagerbolzen (70), der an einer auf dem den geringeren Querschnitt aufweisenden Bereich (64) des Stößels (13) aufgeschobenen Hülse (63) angeordnet ist, ist der freie Endbereich des zweiten Armes (58) mit der Hülse (63) verbunden. Die den Kolbenrückraum (48) begrenzende, der Rückseite des Kolbens (51) gegenüberliegende Wand (47), die lösbar am zweiten Gehäuseteil (2) befestigt ist, besitzt einen Dom (46), in welchem eine Gewindebohrung (45) vorgesehen ist. In die Gewindebohrung (45) ist ein als einstellbarer Anschlag (44) für den Kipphebel (55, 65, 58) dienender Gewindestift eingeschraubt. Mittels des einstellbaren Anschlages (44) läßt sich der Abstand (x) zwischen der Hülse (63) und einer Stufe (62) des Stößels (13) einstellen.

Die Funktion der im vorstehenden beschriebenen Einrichtung wird nachfolgend näher erläutert.

Gemäß Figur 2 befindet sich das Motorwagen-Bremsventil in seiner unbetätigten Stellung. Das Einlaßventil (35, 33) befindet sich in der Schließstellung und das Auslaßventil (34, 33) ist geöffnet. Die Druckmittelausgangskammer (36) ist mit der Atmosphäre verbunden. In der Druckmitteleingangskammer (31) steht Vorratsdruck aus der Druckmittelquelle an.

Desgleichen steht über die Druckmittelleitungen (28, 29) und den Druckmittelanschluß (53) Vorratsdruck aus der Druckmittelquelle in der Druckmittelkammer (52) an.

Der Kolben (51) der Einrichtung zum Erzeugen einer Rückstellkraft für das als Stößel (13, 64) ausgebildete Betätigungsglied wird vom Druckmittel in der Druckmittelkammer (52) in einer Stellung gehalten, in welcher er den ersten Arm (55) des Kraftübertragungsgliedes (55, 65, 58) am einstellbaren Anschlag (44) hält. Durch die Kraft der auf den mit der Gummifeder (25) in Verbindung stehenden Steuerkolben (38) einwirkenden Druckfeder (27) wird der Stößel (13, 64) in einer Position gehalten, in welcher die Stufe (62) des Stößels (13, 64) zur Hülse (63) einen Abstand (x) hat. Der Abstand (x) entspricht in etwa dem Abstand zwischen Auslaßventilsitz (34) und Ventilglied (33) bei geöffnetem Auslaßventil (34, 33). Somit entspricht der Abstand (x) auch dem Leerweg der Trittplatte beim Einleiten eines Bremsvorganges. Innerhalb dieses Leerweges liegt beispielsweise der Schaltpunkt für den Retarder.

Wird vom Fahrer des Fahrzeugs die Trittplatte zum Durchführen einer Bremsung betätigt, so wird der Stößel (13, 64) abwärts, in Schließrichtung des Auslaßventils (34, 33) bewegt. Über die Kalotte (24) und die Gummifeder (25) wirkt die vom Stößel (13, 64) auf die Gummifeder (25) ausgeübte Kraft auf den Steuerkolben (38) ein, wodurch dieser entgegen der Kraft der Druckfeder (27) in Richtung auf das kombinierte Einlaß- und Auslaßventil (35, 33, 34) zu bewegt wird. Das Auslaßventil (34, 33) gelangt in die Schließstellung.

Die Stufe (62) des Stößels (13, 64) durchfährt dabei den Weg (x) und kommt an der Hülse (63) zu Anlage. Wird die Trittplatte des Motorwagen-Bremsventils vom Fahrer des Fahrzeugs weiter abwärts bewegt, so werden auch der Stößel (13, 64), die mit diesem jetzt in Wirkverbindung stehende Hülse (63) und über die Gummifeder (25) der Steuerkolben (38) weiter abwärts bewegt.

Die Kraft des Stößels (13, 64) wird jetzt über die Hülse (63) auf den zweiten Arm (58) des Kipphebels (55, 65, 58) übertragen und der Kipphebel (55, 65, 58) so um den Lagerbolzen (57) verschwenkt. Dabei verschiebt der erste Arm (55) des Kipphebels (55, 65, 58) den Kolben (51) gegen die Kraft des Druckmittels in der Druckmittelkammer (52) in Richtung vom einstellbaren Anschlag (44) weg. Die der über die Trittplatte auf den Stößel (13, 64) ausgeübten Betätigungskraft entgegengerichtete Kraft der Druckfeder (27) wird jetzt um die vom Druckmittel in der Druckmittelkammer (52) erzeugte, über den Kolben (51), den Kipphebel (55, 65, 58) und die Hülse (63) auf den Stößel (13, 64) ausgeübte Kraft erhöht. Bei dieser weiteren Abwärtsbewegung des Stößels (13, 64) gelangt das Einlaßventil (35, 33) gegen die Kraft der Feder (32) in die Offenstellung. Von der Druckmitteleingangskammer (31) strömt Druckmittel über das jetzt geöffnete Einlaßventil (35, 33) in die Druckmittelausgangskammer (36) und von dieser weiter über den Druckmittelausgang (37) zu den als Bremszylinder ausgebildeten Verbrauchern.

Die vom Druckmittel in der Druckmittelkammer (52) erzeugte und über den Kolben (51) sowie den Kipphebel (55, 65, 58) auf den Stößel (13, 64) einwirkende als Rückstellkraft dienende Reaktionskraft nimmt bei der weiteren Bewegung des Kolbens (51) im Sinne einer Volumenverringerung in der Druckmittelkammer (52) nicht weiter zu, da der Druck in der Druckmittelkammer (52) gleich dem Druck in der Druckmittelquelle ist und die Höhe dieses Druckes sich nicht verändert.

Die nach dem Durchfahren des Leerweges (x) auf den Stößel (13, 64) und somit auf die Trittplatte einwirkende Reaktionskraft wird vom Fahrer des Fahrzeugs als Druckpunkt empfunden, welcher dem Fahrer signalisiert, daß das Auslaßventil (34, 33) geschlossen ist und der Öffnungsvorgang für das Einlaßventil (35, 33) beginnt.

Wünscht der Fahrer des Fahrzeugs lediglich eine Verzögerung des Fahrzeugs mittels des Retarders, z. B. auf einer Gefällestrecke, so hält er die Trittplatte in der Position, in welcher die vom Druckmittel in der Druckmittelkammer (52) erzeugte Reaktionskraft (Druckpunkt) spürbar ist. Einlaßventil (35, 33) und Auslaßventil (34, 33) sind bei dieser Stellung der Trittplatte geschlossen.

Zwecks Beendigung eines Bremsvorganges wird vom Fahrer des Fahrzeugs der Fuß von der Trittplatte des Motorwagen-Bremsventils genommen.

Durch die über den Kolben (51) und den Kipphebel (55, 65, 58) sowie die Hülse (63) auf den Stößel (13, 64) einwirkende Reaktionskraft des Druckes in der Druckmittelkammer (52) sowie durch die über den Steuerkolben (38) und die Gummifeder (25) auf den Stößel (13, 64) in Richtung der Reaktionskraft einwirkende Kraft der Druckfeder (27) wird der Stößel (13, 64) nach oben, in Richtung vom kombinierten Einlaß- und Auslaßventil (35, 33, 34) weg bewegt. Das Einlaßventil (35, 33) gelangt in die Schließstellung.

Der Kolben (51) verschwenkt unter der Einwirkung der Kraft des Druckmittels in der Druckmittelkammer (52) den Kipphebel (55, 65, 58) um die Drehachse (57) so weit, bis der erste Arm (55) des Kipphebels (55, 65, 58) am einstellbaren Anschlag (44) zur Anlage kommt. Der Kipphebel (55, 65, 58) kann jetzt nicht mehr weiter um seine Drehachse (57) verschwenkt werden und hat somit auch keinen Einfluß mehr auf den Stößel (13, 64). Die auf dem Stößel (13, 64) einwirkende Kraft reduziert sich jetzt bis auf die von der Druckfeder (27) erzeugte Kraft. Mittels der Kraft der Druckfeder (27) wird der Stößel (13, 64) weiter nach oben bewegt, durchfährt dabei den Weg (x) und nimmt dann seine Ausgangsstellung ein. Da der Stößel (13, 64) mit der Trittplatte in Verbindung steht, gelangt auch diese wieder in ihre Ausgangsstellung. Das Auslaßventil (34, 33) befindet sich jetzt wieder in der Offenstellung. Die Bremszylinder werden über die Druckmittelausgangskammer (36) und das Auslaßventil (34, 33) zur Atmosphäre hin entlüftet.

Zur Unterstützung der Rückstellbewegung der Trittplatte kann im Bereich der Drehgelenkstelle für die Trittplatte zusätzlich eine auf die Trittplatte einwirkende Drehfeder vorgesehen werden.

Es ist natürlich auch möglich, die Druckmittelkammer (4 bzw. 52) mit der Druckmittelausgangskammer (36) oder mit einer von der Druckmittelausgangskammer (36) zu den Verbrauchern führenden Druckmittelleitung zu verbinden. In dem Fall würde sich die auf den Stößel (13, 64) einwirkende Rückstellkraft erst beim Öffnen des Einlaßventils (35, 33) des kombinierten Einlaß- und Auslaßventils (35, 33, 34) einstellen. Die Rückstellkraft würde mit zunehmendem Druckaufbau in dem Verbraucher ebenfalls zunehmen. Die Druckmittelquelle zur Speisung der Druckmittelkammer (4, 5) ist in diesem Fall eine Druckmittelquelle veränderbaren Druckes.

Es ist desweiteren möglich, die Druckmittelkammer (4 bzw. 52) mit einer separaten Druckmittelquelle zu verbinden.

Als Druckmittel für die Einrichtung zum Erzeugen einer Reaktionskraft dient vorteilhafterweise ein gasförmiges Medium.

Die erfindungsgemäße Einrichtung ist natürlich nicht nur bei einem Motorwagen-Bremsventil für eine druckmittelbetriebene Bremsanlage eines Fahrzeugs der beschriebenen Art einsetzbar. Sie kann in allen Einrichtungen und Geräten eingesetzt werden, bei denen ein Betätigungsglied gegen eine Reaktionskraft bzw. eine Rückstellkraft auf eine zu betätigende Einrichtung zu bewegt werden soll. Dies kann z. B. auch eine einfache Ventileinrichtung mit einer Druckmitteleingangskammer, einer Druckmittelausgangskammer sowie einem die Druckmittelausgangskammer und die Druckmitteleingangskammer gegeneinander absperrenden oder miteinander verbindenden Ventil sein, wobei das Ventil aus einem Ventilsitzt und einem relativ zu diesem bewegbaren Ventilglied besteht.

Bei der in Figur 2 gezeigten Einrichtung können das obere Gehäuseteil (2) und der Zylinder (54) der Zylinder-Kolben-Einrichtung (51, 52, 53, 54) als eine einstückige Baueinheit ausgebildet sein.

Von Bedeutung für die Erfindung ist es, daß eine von einer bewegbaren Wand (5, 6, 7, 51) begrenzte Druckmittelkammer (4, 52) vorgesehen ist und daß die Wand (5, 6, 7, 51) oder ein mit der Wand (5, 6, 7, 51) oder/und dem Betätigungsglied (13, 64) der zu betätigenden Einrichtung in Wirkverbindung stehendes Kraftübertragungsglied (9, 15, 55, 65, 58) so zu dem Betätigungsglied (13, 64) oder einem mit dem Betätigungsglied (13, 64) verbundenen Teil angeordnet ist, daß bei einem Betätigungshub des Betätigungsgliedes (13, 64) die Wand (5, 6, 7, 51) von dem Kraftübertragungsglied (9 15, 55, 65, 58) oder vom Betätigungsglied (13, 64) oder von einem mit dem Betätigungsglied (13, 64) verbundenen Teil gegen die vom Druckmittel in der Druckmittelkammer (4, 52) auf die Wand (5, 6, 7, 51) ausgeübte Kraft bewegt wird.

Das Kraftübertragungsglied kann, wie beschrieben, als Ringscheibe ausgebildet sein, die einen sich auf die bewegbare Wand zuerstreckenden Vorsprung aufweist. Sie kann auch als ein mit dem Betätigungsglied und der bewegbaren Wand zusammenwirkender Kipphebel ausgebildet sein. Es ist jedoch auch möglich, als Kraftübertragungsglied jedes beliebige andere Bauteil zu verwenden, mit welchem vom Betätigungsglied eine Kraft auf die bewegbare Wand und umgekehrt von der bewegbaren Wand eine Kraft auf das Betätigungsglied übertragen werden kann. Denkbar sind z. B. Winkelstücke, Platten mit nockenartigen Anformungen, Stäbe usw., die mit dem Betätigungsglied oder mit der bewegbaren Wand verbunden oder mit beiden in Wirkverbindung bringbar sind.

Das Betätigungsglied für die zu betätigende Einrichtung kann, wie beschrieben, ein Stößel sein. Es kann jedoch auch z. B. eine verschiebbare Achse oder ein verschwenkbarer Hebel der zu betätigenden Einrichtung sein.

## Patentansprüche

1. Einrichtung zum Erzeugen einer Reaktionskraft für das Betätigungsglied (13, 64) einer zu betätigenden Einrichtung mit folgenden Merkmalen:
a) es ist eine von einer bewegbaren Wand (5, 6, 7, 51) begrenzte Druckmittelkammer (4, 52) vorgesehen;
b) die Wand (5, 6, 7, 51) und das Betätigungsglied (13, 64) wirken in der Weise zusammen, daß die Wand (5, 6, 7, 51) bei einem Betätigungshub des Betätigungsgliedes (13, 64) gegen die vom Druckmittel in der Druckmittelkammer (4, 52) auf die Wand (5, 6, 7, 51) ausgeübte Kraft bewegt wird;
gekennzeichnet durch die folgenden Merkmale:
c) die Wand (5, 6, 7, 51) und das Betätigungsglied (13, 64) sind relativ zueinander bewegbar angeordnet;
d) es ist ein Anschlag (42, 44) für die Wand (5, 6, 7, 51) oder ein mit der Wand (5, 6, 7, 51) und dem Betätigungsglied (13, 64) zusammenwirkendes Kraftübertragungsglied (9, 15, 55, 65, 58) vorgesehen, an welchem die Wand (5, 6, 7, 51) bzw. das Kraftübertragungsglied (9, 15, 55, 65, 58) durch die Kraft des auf die Wand (5, 6, 7, 51) einwirkenden Druckmittels in der Druckmittelkammer (4, 52) gehalten wird;
e) die Wand (5, 6, 7, 51) oder/und das Kraftübertragungsglied (9, 15, 55, 65, 58) ist so zu dem Betätigungsglied (13, 64) oder einem mit dem Betätigungsglied (13, 64) verbundenen Teil angeordnet, daß eine Wirkverbindung zwischen der Wand (5, 6, 7, 51) und dem Betätigungsglied (13, 64) bzw. zwischen der Wand (5, 6, 7, 51), dem Kraftübertragungsglied (9, 15, 55, 65, 58) und dem Betätigungsglied (13, 64) erst dann hergestellt wird, wenn das Betätigungsglied (13, 64) bei einem Betätigungshub einen Leerweg X durchfahren hat.

2. Einrichtung nach Anspruch 1, dadurch gekennzeichnet, daß die zu betätigende Einrichtung als Motorwagen-Bremsventil für eine druckmittelbetriebene Bremsanlage für ein Kraftfahrzeug ausgebildet ist.

3. Einrichtung nach Anspruch 1, dadurch gekennzeichnet, daß die bewegbare Wand als Kolben (5, 6, 7, 51) einer Zylinder-Kolben-Einrichtung (3, 41, 40, 4, 51, 54, 52) ausgebildet ist, welche die Druckmittelkammer (4, 52) enthält.

4. Einrichtung nach Anspruch 3, gekennzeichnet durch die folgenden Merkmale:
a) die zu betätigende Einrichtung besteht aus einem von einem Ventilsitz (35, 34) und einem relativ zu diesem bewegbaren Ventilglied (33) gebildeten Ventil (35, 34, 33);
b) das Betätigungsglied besteht aus einem Stößel (13), der direkt oder über ein Zwischenglied (22, 24, 25, 38) auf das Ventilglied (33) oder auf den Ventilsitz (35, 34) im Sinne eines Öffnungsvorgangs oder eines Schließvorgangs für das Ventil (35, 34, 33) einwirkt;
c) die Zylinder-Kolben-Einrichtung besteht aus einem ringförmig ausgebildeten Zylinder (3, 41, 19), der von zwei koaxial zueinander angeordneten, den Stößel (13) ringförmig umgebenden Wänden (3, 41) und einem ringförmigen Boden (19) gebildet wird und einen Ringkolben (5, 6, 7), der im Zylinder (3, 41, 19) geführt wird;
d) das Kraftübertragungsglied besteht aus einer mit dem Stößel (13) verbundenen, den Stößel (13) umgebenden Ringscheibe (9), die einen koaxial zum Stößel (13) angeordneten umlaufenden Vorsprung (15) aufweist;
e) die den umlaufenden Vorsprung (15) aufweisende Ringscheibe (9) ist so zu dem Ringkolben (5, 6, 7) angeordnet, daß der Ringkolben (5, 6, 7) bei einer Bewegung des Stößels (13) in Richtung auf das Ventil (35, 34, 33) zu von dem umlaufenden Vorsprung (15) der Ringscheibe (9) gegen die Kraft des in der Druckmittelkammer (4) des Zylinders (3, 41, 19) befindlichen Druckmittels in Richtung auf den Boden (19) des Zylinders (3, 41, 19) zu bewegt wird.

5. Einrichtung nach Anspruch 3, gekennzeichnet durch die folgenden Merkmale:
a) die zu betätigende Einrichtung besteht aus einem von einem Ventilsitz (35, 34) und einem relativ zu diesem bewegbaren Ventilglied (33) gebildeten Ventil (35, 34, 33);
b) das Betätigungsglied besteht aus einem Stößel (13), der direkt oder über ein Zwischenglied (22, 24, 25, 38) auf das Ventilglied (33) oder auf den Ventilsitz (35, 34) im Sinne eines Öffnungsvorganges oder eines Schließvorganges für das Ventil (35, 34, 33) einwirkt;
c) die Zylinder-Kolben-Einrichtung besteht aus einem Zylinder (54) und einem im Zylinder (54) geführten Kolben (51);
d) der Zylinder (54) ist neben dem Stößel (13, 64) angeordnet;
e) zwischen dem Kolben (51) und dem Stößel (13, 64) ist ein um eine Drehachse (57) verschwenkbarer Kipphebel (55, 65, 58) mit einem ersten Arm (55) und einem zweiten Arm (58) angeordnet, derart, daß der erste Arm (55) sich von der Drehachse (57) weg, quer zur Längsachse des Kolbens (51) erstreckt und der zweite Arm (58) sich von der Drehachse (57) weg, quer zur Längsachse des Stößels (13, 64) verlaufend bis in den Bereich des Stößels (13, 64) erstreckt;
f) der Kipphebel (55, 65 , 58) ist so zu dem Stößel (13, 64) und dem Kolben (51) angeordnet, daß bei einer Bewegung des Stößels (13, 64) in Öffnungsrichtung des Einlaßventils (35, 33) der Kolben (51) von dem Kipphebel (55, 65, 58) gegen die Kraft des Druckmittels in der Druckmittelkammer (52) bewegt wird.

6. Einrichtung nach wenigstens einem der vorhergehenden Ansprüche, dadurch gekennzeichnet, daß die Druckmittelkammer (4, 52) mit einer Druckmittelquelle konstanten Druckes verbunden ist.

7. Einrichtung nach Anspruch 6, dadurch gekennzeichnet, daß die Druckmittelquelle konstanten Druckes die Druckmitteleingangskammer (31) ist.

8. Einrichtung nach wenigstens einem der vorhergehenden Ansprüche, dadurch gekennzeichnet, daß die Druckmittelkammer (4, 52) mit einer Druckmittelquelle veränderbaren Druckes verbunden ist.

9. Einrichtung nach Anspruch 8, dadurch gekennzeichnet, daß die Druckmittelquelle veränderbaren Druckes die Druckmittelausgangskammer (36) ist.

## Claims

1. Device for producing a reaction force for the actuating member (13, 64) of a device to be actuated, having the following features:
a) a pressure medium chamber (4, 52) bounded by a movable wall (5, 6, 7, 51) is provided;
b) the wall (5, 6, 7, 51) and the actuating member (13, 64) co-operate in such a way that the wall (5, 6, 7, 51), during an actuation stroke of the actuating member (13, 64), is moved against the force exerted on the wall (5, 6, 7, 51) by the pressure medium in the pressure medium chamber (4, 52).
characterized by the following features:
c) the wall (5, 6, 7, 51) and the actuating member (13, 64) are arranged to be movable relative to each other;
d) a stop (42, 44) is provided for the wall (5, 6, 7, 51) or a force transmission member (9, 15, 55, 65, 58) co-operating with the wall (5, 6, 7, 51) and the actuating member (13, 64), on which stop the wall (5, 6, 7, 51) or the force transmission member (9, 15, 55, 65, 58) is held by means of the force of the pressure medium in the pressure medium chamber (4, 52) acting on the wall (5, 6, 7, 51).
e) the wall (5, 6, 7, 51) and/or the force transmission member (9, 15, 55, 65, 58) is so arranged with respect to the actuating member (13, 64) or a part connected to the actuating member (13, 64) that an active connection between the wall (5, 6, 7, 51) and the actuating member (13, 64) or between the wall (5, 6, 7, 51), the force transmission member (9, 15, 55, 65, 58) and the actuating member (13, 64) is produced only when the actuating member (13, 64) has travelled over an idling distance X during an actuation stroke.

2. Device according to Claim 1, characterized in that the device to be actuated is in the form of a motor vehicle brake valve for a pressure medium-operated brake system for a motor vehicle.

3. Device according to Claim 1, characterized in that the movable wall is in the form of a piston (5, 6, 7, 51) of a cylinder/piston arrangement (3, 41, 40, 4, 51, 54, 52) which contains the pressure medium chamber (4, 52).

4. Device according to Claim 3, characterized by the following features:
a) the device to be actuated consists of a valve (35, 34, 33) formed by a valve seat (35, 34) and a valve member (33) movable relative to the latter;
b) the actuating member consists of a plunger (13) which, directly or by way of an intermediate member (22, 24, 25, 38), acts on the valve member (33) or on the valve seat (35, 34) for the purpose of an opening operation or a closing operation for the valve (35, 34, 33);
c) the cylinder/piston arrangement consists of an annular cylinder (3, 41, 19) which is formed by two walls (3, 41), arranged coaxially with each other and surrounding the plunger (13) in a ring shape, and an annular floor (19), and an annular piston (5, 6, 7) which is guided in the cylinder (3, 41, 19);
d) the force transmission member consists of an annular plate (9) which is connected to the plunger (13) and surrounds the plunger (13), and which has a circumferential projection (15) arranged coaxially with the plunger (13);
e) the annular plate (9) having the circumferential projection (15) is so arranged with respect to the annular piston (5, 6, 7) that the annular piston (5, 6, 7), during a movement of the plunger (13) towards the valve (35, 34, 33), is moved by the circumferential projection (15) of the annular plate (9) against the force of the pressure medium, present in the pressure medium chamber (4) of the cylinder (3, 41, 19), towards the floor (19) of the cylinder (3, 41, 19).

5. Device according to claim 3, characterized by the following features:
a) the device to be actuated consists of a valve (35, 34, 33) formed by a valve seat (35, 34) and a valve member (33) movable relative to the latter;
b) the actuating member consists of a plunger (13) which, directly or by way of an intermediate member (22, 24, 25, 38), acts on the valve member (33) or on the valve seat (35, 34) for the purpose of an opening operation or a closing operation for the valve (35, 34, 33);
c) the cylinder/piston arrangement consists of a cylinder (54) and a piston (51) guided in the cylinder (54);
d) the cylinder (54) is arranged near the plunger (13, 64);
e) between the piston (51) and the plunger (13, 64) a rocker lever (55, 65, 58) pivotable about a rotation axis (57) and having a first arm (55) and a second arm (58) is arranged in such a way that the first arm (55) extends away from the rotation axis (57), transversely to the longitudinal axis of the piston (51), and the second arm (58) extends away from the rotation axis (57), transversely to the longitudinal axis of the plunger (13, 64), into the region of the plunger (13, 64);
f) the rocker lever (55, 65, 58) is so arranged with respect to the plunger (13, 64) and the piston (51) that, during a movement of the plunger (13, 64) in the opening direction of the inlet valve (35, 33), the piston is moved by the rocker lever (55, 65, 58) against the force of the pressure medium in the pressure medium chamber (52).

6. Device according to at least one of the preceding claims, characterized in that the pressure medium chamber (4, 52) is connected to a pressure medium source of constant pressure.

7. Device according to Claim 6, characterized in that the pressure medium source of constant pressure is the pressure medium inlet chamber (31).

8. Device according to at least one of the preceding claims, characterized in that the pressure medium chamber (4, 52) is connected to a pressure medium source of variable pressure.

9. Device according to Claim 8, characterized in that the pressure medium source of variable pressure is the pressure medium outlet chamber (36).

## Revendications

1. Dispositif pour générer une force de réaction pour l'organe d'actionnement (13, 64) d'un dispositif à actionner, présentant les éléments suivants :
a) il est prévu une chambre à fluide sous pression (4, 52) délimitée par une paroi mobile (5, 6, 7, 51),
b) la paroi (5, 6, 7, 51) et l'organe d'actionnement (13, 64) coopèrent de telle sorte que la paroi (5, 6, 7, 51) est déplacée, lors d'une course d'actionnement de l'organe d'actionnement (13, 64), à l'encontre de la force exercée par le fluide sous pression dans la chambre à fluide sous pression (4, 52) sur la paroi (5, 6, 7, 51),
caractérisé en ce que :
c) la paroi (5, 6, 7, 51) et l'organe d'actionnement (13, 64) sont agencés de façon mobile l'un par rapport à l'autre ;
d) il est prévu une butée (42, 44) pour la paroi (5, 6, 7, 51) ou pour un organe de transmission de force (9, 15, 55, 65, 58) coopérant avec la paroi (5, 6, 7, 51) et avec l'organe d'actionnement (13, 64), butée contre laquelle la paroi (5, 6, 7, 51) ou l'organe de transmission de force (9, 15, 55, 65, 58) est retenu par la force du fluide sous pression dans la chambre à fluide sous pression (4, 52) agissant sur la paroi (5, 6, 7, 51) ;
e) la paroi (5, 6, 7, 51) ou/et l'organe de transmission de force (9, 15, 55, 65, 58) est agencé de telle sorte par rapport à l'organe d'actionnement (13, 64) ou par rapport à une pièce reliée à l'organe d'actionnement (13, 64) qu'il en résulte une liaison d'action entre la paroi (5, 6, 7, 51) et l'organe d'actionnement (13, 64) ou entre la paroi (5, 6, 7, 51), l'organe de transmission de force (9, 15, 55, 65, 58) et l'organe d'actionnement (13, 64) uniquement lorsque l'organe d'actionnement (13, 64) a parcouru une course à vide X lors d'une course d'actionnement.

2. Dispositif selon la revendication 1, caractérisé en ce que le dispositif à actionner est réalisé sous forme d'une valve de freinage pour une installation de freinage actionnée par un fluide sous pression pour un véhicule automobile.

3. Dispositif selon la revendication 1, caractérisé en ce que la paroi mobile est réalisée sous forme d'un piston (5, 6, 7, 51) d'un dispositif à cylindre-et-piston (3, 41, 40, 4, 51, 54, 52) qui comporte la chambre à fluide sous pression (4, 52).

4. Dispositif selon la revendication 3, caractérisé en ce que :
a) le dispositif à actionner est constitué par une valve (35, 34, 33) formée par un siège de valve (35, 34) et par un organe de valve (33) mobile par rapport à celui-ci ;
b) l'organe d'actionnement est constitué par un poinçon (13) qui agit directement ou via un organe intermédiaire (22, 24, 25, 38) sur l'organe de valve (33) ou sur le siège de valve (35, 34) dans le sens d'une opération d'ouverture ou d'une opération de fermeture pour la valve (35, 34, 33) ;
c) le dispositif à cylindre-et-piston est constitué par un cylindre annulaire (3, 41, 19) qui est formé par deux parois (3, 41) coaxiales l'une par rapport à l'autre et entourant de façon annulaire le poinçon (13) et par un fond annulaire (19), et par un piston annulaire (5, 6, 7) qui est guidé dans le cylindre (3, 41, 19) ;
d) l'organe de transmission de force est constitué par un disque annulaire (9) relié au poinçon (13) et entourant le poinçon (13), qui présente une saillie périphérique (15) agencée de façon coaxiale par rapport au poinçon (13) ;
e) le disque annulaire (9) présentant la saillie périphérique (15) est agencé de telle sorte par rapport au piston annulaire (5, 6, 7) que le piston annulaire (5, 6, 7) est déplacé, lors d'un mouvement du poinçon (13) en direction de la valve (35, 34, 33), par la saillie périphérique (15) du disque annulaire (9) à l'encontre de la force du fluide sous pression situé dans la chambre à fluide sous pression (4) du cylindre (3, 41, 19) en direction du fond (19) du cylindre (3, 41, 19).

5. Dispositif selon la revendication 3, caractérisé en ce que :
a) le dispositif à actionner est constitué par une valve (35, 34, 33) formée par un siège de valve (35, 34) et par un organe de valve (33) mobile par rapport à celui-ci ;
b) l'organe d'actionnement est constitué par un poinçon (13) qui agit directement ou via un organe intermédiaire (22, 24, 25, 38) sur l'organe de valve (33) ou sur le siège de valve (35, 34) dans le sens d'une opération d'ouverture ou d'une opération de fermeture pour la valve (35, 34, 33) ;
c) le dispositif à cylindre-et-piston est constitué par un cylindre (54) et par un piston (51) guidé dans le cylindre (54) ;
d) le cylindre (54) est agencé à côté du poinçon (13, 64) ;
e) entre le piston (51) et le poinçon (13, 64) est agencé un levier basculant (55, 65, 58) en basculement autour d'un axe de rotation (57) et présentant un premier bras (55) et un second bras (58), de telle sorte que le premier bras (55) s'étend en éloignement de l'axe de rotation (57) transversalement à l'axe longitudinal du piston (51) et que le second bras (58) s'étend en éloignement de l'axe de rotation (57) transversalement à l'axe longitudinal du poinçon (13, 64) jusque dans la région du poinçon (13, 64) ;
f) le levier basculant (55, 65, 58) est agencé de telle façon par rapport au poinçon (13, 64) et au piston (51) que lors d'un mouvement du poinçon (13, 64) en direction d'ouverture de la valve d'entrée (35, 33) le piston (51) est déplacé par le levier basculant (55, 65, 58) à l'encontre de la force du fluide sous pression dans la chambre à fluide sous pression (52).

6. Dispositif selon l'une quelconque au moins des revendications précédentes, caractérisé en ce que la chambre à fluide sous pression (4, 52) est reliée à une source à fluide sous une pression constante.

7. Dispositif selon la revendication 6, caractérisé en ce que la source à fluide sous une pression constante est la chambre d'entrée à fluide sous pression (31).

8. Dispositif selon l'une quelconque au moins des revendications précédentes, caractérisé en ce que la chambre à fluide sous pression (4, 52) est reliée à une source à fluide sous une pression variable.

9. Dispositif selon la revendication 8, caractérisé en ce que la source à fluide sous une pression variable est la chambre de sortie à fluide sous pression (36).
